# EUROPEAN PATENT APPLICATION

(11) **EP 4 351 020 A1**
(43) Date of publication of application: **10.04.2024**
(21) Application number: 23821476.1
(22) Date of filing: 26.07.2023
(51) Int. Cl.: H04B 1/40, H04B 1/04, H04B 1/18, H04B 17/12, H01Q 1/38, H01Q 1/24, H01Q 3/26, H04B 7/0413

(54) **ELECTRONIC DEVICE COMPRISING COUPLER CONNECTED TO ANTENNA IN WIRELESS ENVIRONMENT**

(30) Priority: 02.08.2022 KR 20220096410; 18.08.2022 KR 20220103661
(71) Applicant: Samsung Electronics Co., Ltd., Suwon-si 9 16677 (KR)
(72) Inventor: VAN, Juho, Suwon-si, Gyeonggi-do 16677 (KR); JANG, Kyujae, Suwon-si, Gyeonggi-do 16677 (KR); NA, Hyoseok, Suwon-si, Gyeonggi-do 16677 (KR); MOON, Yohan, Suwon-si, Gyeonggi-do 16677 (KR)
(74) Representative: HGF
(86) International application number: PCT/KR2023/010877
(87) International publication number: WO 2024/029831

(57) **Abstract**

An electronic device is provided including an antenna, a radio frequency front end (RFFE) including a coupler connected to the antenna and a power amplifier (PA) connected to the coupler, a first radio frequency integrated circuit (RFIC) including a transmitting circuit connected to the PA and a receiving circuit connectable to a forward path from the coupler, a second RFIC including a receiving circuit connectable to a reverse path from the coupler, and a processor. The processor may be configured to transmit a signal obtained through the transmitting circuit, via the antenna with power set using the PA; obtain a forward coupling signal of the signal provided through the forward path according to the transmission of the signal, via the receiving circuit of the first RFIC; obtain a reverse coupling signal of the signal provided through the reverse path, via the receiving circuit of the second RFIC according to the transmission of the signal; and identify strength of a signal to be transmitted through the antenna, based on the forward coupling signal and the reverse coupling signal. Further, various other embodiments may be possible.

## Description

### [Technical Field]

The following descriptions relate to an electronic device including a coupler connected with an antenna in a wireless environment.

### [Background Art]

An electronic device may include an antenna, a radio frequency front end (RFFE), and a radio frequency integrated circuit (RFIC), for wireless communication with an external electronic device. For example, the RFFE may include a coupler connected to the antenna. For example, the coupler may be used to obtain a coupling signal having characteristics corresponding to the characteristics of a signal related to the antenna. For example, the coupling signal may include a forward coupling signal and a reverse coupling signal.

### [Disclosure]

### [Technical Solution]

An electronic device is provided. The electronic device may include an antenna. The electronic device may include a radio frequency front end (RFFE) including a coupler connected to the antenna and a power amplifier (PA) connected to the coupler. The electronic device may include a first radio frequency integrated circuit (RFIC) including a transmitting circuit connected to the PA and a receiving circuit connectable to a forward path from the coupler. The electronic device may include a second radio frequency integrated circuit (RFIC) including a receiving circuit connectable to a reverse path from the coupler. The electronic device may include a processor. The processor may be configured to transmit a signal obtained through the transmitting circuit, via the antenna with power set using the PA. The processor may be configured to obtain a forward coupling signal of the signal provided through the forward path according to the transmission of the signal, via the receiving circuit of the first RFIC. The processor may be configured to obtain a reverse coupling signal of the signal provided through the reverse path, via the receiving circuit of the second RFIC according to the transmission of the signal. The processor may be configured to identify strength of a signal to be transmitted through the antenna, based on the forward coupling signal and the reverse coupling signal.

An electronic device is provided. The electronic device may include a first antenna. The electronic device may include a second antenna. The electronic device may include a first radio frequency front end (RFFE) including a coupler connected to the first antenna and a power amplifier (PA) connected to the coupler. The electronic device may include a second RFFE including another coupler connected to the second antenna and another PA connected to the another coupler. The electronic device may include a first radio frequency integrated circuit (RFIC) including a transmitting circuit connected to the PA and a receiving circuit connectable to a forward path from the coupler or a reverse path from the another coupler. The electronic device may include a second RFIC including another transmitting circuit connected to the another PA and another receiving circuit connectable to a reverse path from the coupler or a forward path from the another coupler. The electronic device may include a processor. The processor may be configured to, based on transmitting a first signal obtained through the transmitting circuit, via the first antenna, with power set using the PA, obtain a forward coupling signal of the first signal provided through the forward path from the coupler, via the receiving circuit, and obtain a reverse coupling signal of the first signal provided through the reverse path from the coupler, via the another receiving circuit. The processor may be configured to, based on transmitting a second signal obtained through the another transmitting circuit, via the second antenna, with power set using the another PA, obtain a forward coupling signal of the second signal provided through the forward path from the another coupler, via the another receiving circuit, and obtain a reverse coupling signal of the second signal provided through the reverse path from the another coupler, via the receiving circuit. The processor may be configured to identify strength of a signal to be transmitted through the first antenna, based on the forward coupling signal of the first signal and the reverse coupling signal of the first signal. The processor may be configured to identify strength of a signal to be transmitted through the second antenna, based on the forward coupling signal of the second signal and the reverse coupling signal of the second signal.

### [Description of the Drawings]

FIG. 1 is a simplified block diagram of an exemplary electronic device.
FIG. 2 illustrates an example of a switch included in a radio frequency front end (RFFE).
FIG. 3 is a simplified block diagram of an exemplary electronic device including a plurality of RFFEs.
FIG. 4 is a simplified block diagram of an exemplary electronic device including radio frequency integrated circuits (RFICs) each including transmitting circuits.
FIG. 5 is a block diagram of an electronic device in a network environment according to various embodiments.

### [Mode for Invention]

An electronic device may include a radio frequency integrated circuit (RFIC) (e.g., radio frequency transceiver (RF transceiver)), a radio frequency front end (RFFE), and an antenna, for communication with an external electronic device. For example, the RFFE may include a coupler connected to the antenna and a switch connected to the coupler. The coupler may be used to obtain a forward coupling signal and/or a reverse coupling signal of a signal related to the antenna. A state of the switch may include a first state for providing the forward coupling signal to a receiving circuit of the RFIC and a second state for providing the reverse coupling signal to the receiving circuit. For example, changing the state of the switch from the first state (or the second state) to the second state (or the first state) for providing the forward coupling signal and the reverse coupling signal to the receiving circuit may cause noise. For example, at least some of such noise may be applied to a low noise filter (LNA) connected to a duplexer of the RFFE connected to the coupler. This may degrade communication performance.

A coupler of an electronic device illustrated throughout the following description may include a plurality of paths with a forward path and a reverse path (e.g., a coupler may comprise a plurality of paths including a forward path and a reverse path, and/or a coupler may comprise a plurality of paths including a plurality of forward paths and a plurality of reverse paths - as will be seen in the following disclosure), as opposed to the aforementioned coupler.

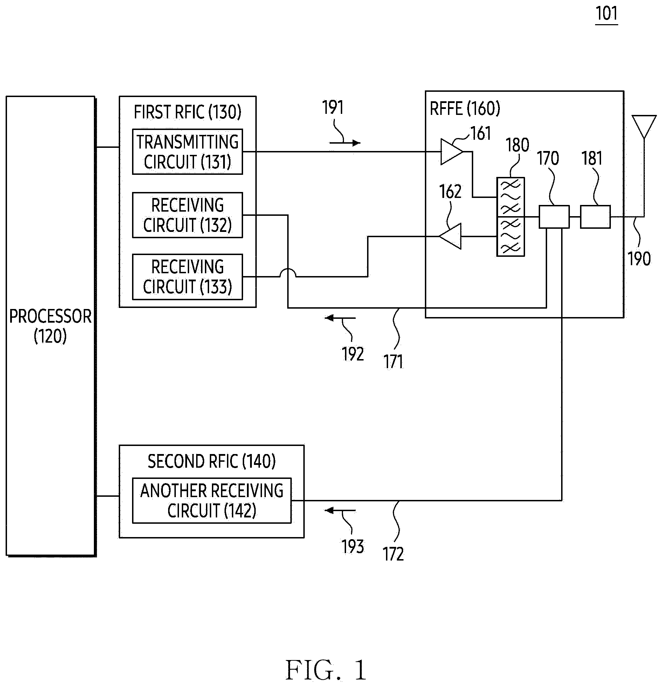

FIG. 1 is a simplified block diagram of an exemplary electronic device.

Referring to FIG. 1, an electronic device 101 may include a processor 120, a first RFIC 130, a second RFIC 140, an RFFE 160, and an antenna 190.

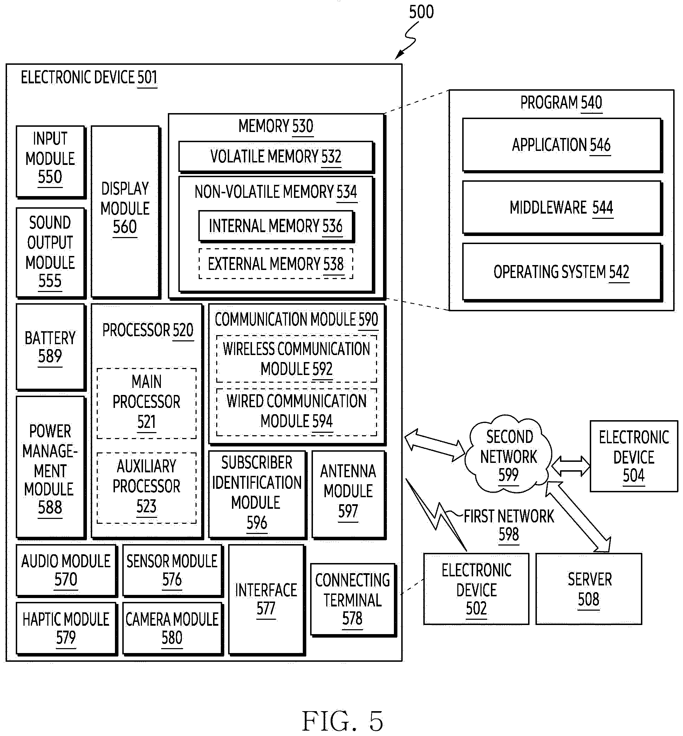

For example, the electronic device 101 may include at least a portion of an electronic device 501 in FIG. 5, which will be illustrated below. For example, the processor 120 may include or correspond to at least a portion of a processor 520 in FIG. 5, which will be illustrated below. For example, the RFIC 130 or the RFFE 160 may include or correspond to at least a portion of a wireless communication module 592 in FIG. 5 and/or at least a portion of an antenna module 597 in FIG. 5. For example, the antenna 190 may include or correspond to at least a portion of an antenna module 597 in FIG. 5. However, the disclosure is not limited thereto.

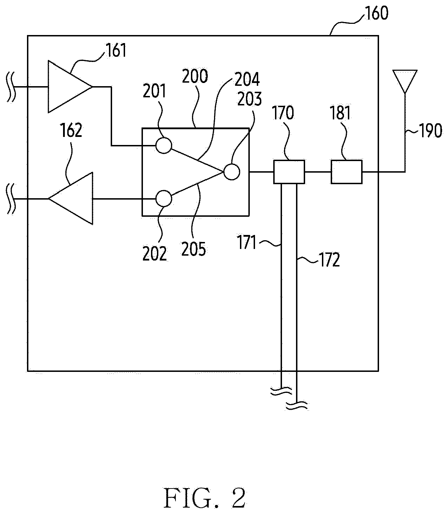

For example, the RFFE 160 may include a coupler 170 connected to the antenna 190. For example, the coupler 170 may be used to obtain a forward coupling signal that is at least part of a signal transmitted through the antenna 190 and a reverse coupling signal that is at least part of a signal (e.g., another signal) reflected by the transmission of the signal. For example, the electronic device 101 may include a forward path 171 for the forward coupling signal and a reverse path 172 for the reverse coupling signal. For example, each of the forward path 171 and the reverse path 172 may be connected to the coupler 170. For example, the coupler 170 may include a port for the forward path 171 and a port for the reverse path 172. For example, the forward path 171 may refer to an output of the coupler 170 which carries or provides the forward coupling signal, such that an entity or component connected to this output of the coupler 170 (i.e., connected to the forward path 171) may obtain the forward coupling signal. For example, the reverse path 172 may refer to an output of the coupler 170 which carries or provides the reverse coupling signal, such that an entity or component connected to this output of the coupler (i.e., connected to the reverse path 172) may obtain the reverse coupling signal. For example, the RFFE 160 may include a power amplifier (PA) 161 connected to the coupler 170. For example, throughout the present disclosure, an expression "connecting a first component and a second component" may indicate that the first component and the second component are not only directly connected, but also connected via a third component (e.g., indirectly connected). For example, the PA 161 may be connected to the coupler 170 through a duplexer 180. For example, the RFFE 160 may include the duplexer 180 between the PA 161 and the coupler 170. The RFFE 160 may include a switch that replaces the duplexer 180. The switch will be further illustrated with reference to FIG. 2.

FIG. 2 illustrates an example of a switch included in an RFFE.

Referring to FIG. 2, the RFFE 160 may include a switch 200 in place of the duplexer 180. For example, when the RFFE 160 is an RFFE for frequency division duplex (FDD), the RFFE 160 may include a duplexer 180. For example, when the RFFE 160 is an RFFE for time division duplex (TDD), the RFFE 160 may include a switch 200. For example, the switch 200 may include a first terminal 201 connected to the PA 161, a second terminal 202 connected to a low noise amplifier (LNA) 162 to be described below, and a third terminal 203 connected to the coupler 170. For example, the switch 200 may be in a first state 204 connecting the first terminal 201 and the third terminal 203, in time resources transmitting a signal through the antenna 190. For example, the switch 200 may be in a second state 205 connecting the second terminal 202 and the third terminal 203, in time resources receiving a signal through the antenna 190. It is noted that Fig. 2 illustrates both first state 204 and second state 205 simultaneously, yet it will be appreciated that the switch 200 is in either the first state 204 or the second state 205.

Referring back to FIG. 1, the PA 161 may be used to set transmission power of a signal transmitted through antenna 190. For example, the duplexer 180 may be used to identify a signal transmitted through the antenna 190 and/or a signal received through the antenna 190.

For example, the RFFE 160 may further include a tuner 181 connected to the antenna 190 and connected to the coupler 170. For example, the tuner 181 may be used to adjust impedance of the antenna 190.

The RFFE 160 may further include an LNA 162. For example, the LNA 162 may be used to amplify the power of the signal received through the antenna 190.

The first RFIC 130 may include a transmitting circuit 131 including one or more Tx (transmit) chains. For example, the transmitting circuit 131 may be connected to the PA 161. For example, the one or more Tx chains may include a mixer for up-conversion. For example, the mixer may be connected to a local oscillator (LO) of the first RFIC 130. For example, each of the one or more Tx chains may include a digital-to-analog converter (DAC) and a PA. For example, the DAC may be used to convert a digital signal input to the DAC into an analog signal. For example, the PA may be used to amplify a signal input to the PA. However, the disclosure is not limited thereto.

The first RFIC 130 may include a receiving circuit 132 including an Rx (receive) chain. The receiving circuit 132 may be connected to a forward path 171 from the coupler 170. For example, the Rx chain may include a mixer for down-conversion. For example, the mixer in the Rx chain may be connected to the LO. For example, one Tx chain in the transmitting circuit 131 and the Rx chain in the receiving circuit 132 may share the LO. For example, the receiving circuit 132 may be connected to the LO connected to the transmitting circuit 131 unlike another receiving circuit 142 of the second RFIC 140 to be described below. For example, the Rx chain may include an analog-to-digital converter (ADC) and a PA. For example, the PA may be used to amplify a signal input to the PA. For example, the ADC may be used to convert an analog signal input to the ADC into a digital signal.

For example, the first RFIC 130 may further include still another receiving circuit 133. For example, the receiving circuit 133 may be separated from or electrically disconnected from the coupler 170, as opposed to the receiving circuit 132 connectable to the forward path 171 from the coupler 170. For example, the receiving circuit 133 may be electrically connected to the LNA 162 connected to the duplexer 180, as opposed to the receiving circuit 132 connectable to the forward path 171 from the coupler 170. For example, the receiving circuit 133 may be used to obtain a signal received through the antenna 190, unlike the receiving circuit 132 used to obtain a forward coupling signal provided through the forward path 171 from the coupler 170.

The second RFIC 140 may include another receiving circuit 142 including another Rx (receive) chain. The another receiving circuit 142 may be connectable to the reverse path 172 from the coupler 170. For example, the another Rx chain may include another mixer for down-conversion. For example, the another mixer in the another Rx chain may be electrically disconnected from the LO, as opposed to the mixer in the Rx chain of the receiving circuit 132. However, the disclosure is not limited thereto. For example, the another Rx chain of the another receiving circuit 142 may include an analog-to-digital converter (ADC) and a PA. For example, the PA may be used to amplify a signal input to the PA. For example, the ADC may be used to convert an analog signal input to the ADC into a digital signal.

Although not illustrated in FIG. 1 for convenience of description, the second RFIC 140 may further include still another receiving circuit. For example, the receiving circuit may be separated from or electrically disconnected from the coupler 170, as opposed to the other receiving circuit 142 connectable to the reverse path 172 from the coupler 170. For example, the receiving circuit may be connected to an LNA (e.g., the LNA 162) connected to the duplexer 180, as opposed to the other receiving circuits 142 connectable to the reverse path 172 from the coupler 170. For example, the receiving circuit may be used to obtain a signal received through the antenna 190, as opposed to the other receiving circuits 142 used to obtain a reverse coupling signal provided through the reverse path 172 from the coupler 170.

For example, the processor 120 may transmit a signal 191 obtained through the transmitting circuit 131 through the antenna 190 with power set using the PA 161. For example, the processor 120 may obtain a forward coupling signal 192 of the signal 191 provided through the forward path 171 according to the transmission of the signal 191, via the receiving circuit 132. For example, since the forward coupling signal 192 is part of the signal 191, the processor 120 may obtain the forward coupling signal 192 through the receiving circuit 132 connected to the LO connected to the transmitting circuit 131.

For example, the processor 120 may obtain a reverse coupling signal 193 of the signal 191 provided through (e.g., received from) the reverse path 172 according to the transmission of the signal 191, via the other receiving circuit 142. For example, the processor 120 may obtain the reverse coupling signal 193 that is at least part of the signal reflected from the antenna 190 according to the transmission of the signal 191, via the other receiving circuit 142.

For example, as the electronic device 101 includes the forward path 171 and the reverse path 172, as opposed to the electronic device that obtains a forward coupling signal and a reverse coupling signal through a switch, the electronic device 101 can reduce noise that may be caused while obtaining the forward coupling signal 192 and the reverse coupling signal 193. For example, as the connection between the forward path 171 and the receiving circuit 132 is maintained while obtaining the forward coupling signal 192, and the connection between the reverse path 172 and the other receiving circuit 142 is maintained while obtaining the reverse coupling signal 193, the electronic device 101 can reduce the noise.

For example, the processor 120 may perform various operations, based on the forward coupling signal 192 and the reverse coupling signal 193. For example, the processor 120 may identify strength of a signal to be transmitted through the antenna 190, based on the forward coupling signal 192 and the reverse coupling signal 193. For example, the processor 120 may identify the power of a signal 191 transmitted through the antenna 190, based on the forward coupling signal 192. For example, the processor 120 may identify an impedance of the antenna 190, based on the forward coupling signal 192 and the reverse coupling signal 193. For example, the processor 120 may identify a reflection coefficient of the antenna 190, based on the forward coupling signal 192 and the reverse coupling signal 193. For example, the processor 120 may adjust the impedance of the antenna 190 through the tuner 181, based on the forward coupling signal 192 and the reverse coupling signal 193. For example, the processor 120 may identify whether an external object (e.g., at least a part of a human body) is located within a certain distance from the electronic device 101, based on the forward coupling signal 192 and the reverse coupling signal 193. For example, the processor 120 may identify whether the electronic device 101 is gripped, based on the forward coupling signal 192 and the reverse coupling signal 193. However, the disclosure is not limited thereto.

For example, the processor 120 may perform the various operations illustrated above, based on compensating a difference between a phase of the forward coupling signal 192 and a phase of the reverse coupling signal 193. For example, as a length of the forward path 171 may be different from that of the reverse path 172, the processor 120 may perform the various operations, based on compensating such a difference.

As described above, the electronic device 101 (e.g., the processor 120 thereof) may obtain the forward coupling signal 192 and the reverse coupling signal 193, through the forward path 171 from the coupler 170, the reverse path 172, the receiving circuit 132, and the other receiving circuit 142. For example, as the electronic device 101 includes the forward path 171 from the coupler 170, the reverse path 172 from the coupler 170, the receiving circuit 132 connectable to the forward path 171, and the other receiving circuit 142 connectable to the reverse path 172, the electronic device 101 can reduce the noise that may be caused while obtaining the forward coupling signal 192 and the reverse coupling signal 193.

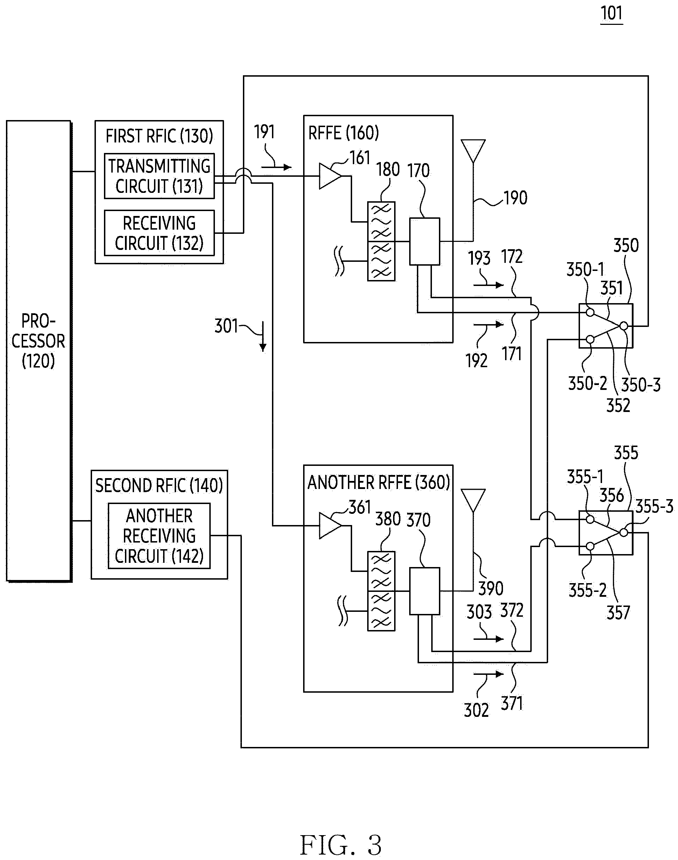

Although the above examples describe that the electronic device 101 includes one RFFE (e.g., the RFFE 160), it is only for convenience of explanation. For example, the electronic device 101 may include a plurality of RFFEs. The electronic device 101 including the plurality of RFFEs will be illustrated below with reference to FIG. 3.

FIG. 3 is a simplified block diagram of an exemplary electronic device including a plurality of RFFEs.

Referring to FIG. 3, the electronic device 101 may include another antenna 390. For example, the electronic device 101 may include another RFFE (radio frequency front end) 360 including another coupler 370 connected to the other antenna 390 and another PA 361 connected to the transmitting circuit 131. For example, the electronic device 101 may include a forward path 371 and a reverse path 372. For example, each of the forward path 371 and the reverse path 372 may be connected to the coupler 370.

For example, the electronic device 101 may include a first switch 350. For example, the first switch 350 may be used to electrically connect one of the forward path 171 from the coupler 170 and the forward path 371 from the other coupler 370, to the receiving circuit 132. For example, since both the PA 161 and the other PA 361 are connected to the transmitting circuit 131 respectively, the receiving circuit 132 connected to the LO connected to the transmitting circuit 131 may be electrically connected through the forward path 171 from the coupler 170 or through the forward path 371 from the other coupler 370, via the first switch 350.

For example, the first switch 350 may include a first terminal 350-1 connected to the forward path 171, a second terminal 350-2 connected to the forward path 371, and a third terminal 350-3 connected to the receiving circuit 132. For example, the first switch 350 may be in multiple states including a first state 351 electrically connecting the first terminal 350-1 and the third terminal 350-3, and a second state 352 electrically connecting the second terminal 350-2 and the third terminal 350-3. For example, the first switch 350 may be located outside the RFFE 160 and the other RFFE 360.

For example, the electronic device 101 may include a second switch 355. For example, the second switch 355 may be used to electrically connect one of the reverse path 172 from the coupler 170 and the reverse path 372 from the other coupler 370, to the other receiving circuit 142. For example, the other receiving circuit 142 may be connected through the reverse path 172 from the coupler 170 or the reverse path 372 from the other coupler 370, via the second switch 355, as opposed to the receiving circuit 132 connected to the LO connected with the transmitting circuit 131.

For example, the second switch 355 may include a first terminal 355-1 connected to the reverse path 172, a second terminal 355-2 connected to the reverse path 372, and a third terminal 355-3 connected to the other receiving circuit 142. For example, the second switch 355 may be in multiple states including a first state 356 electrically connecting the first terminal 355-1 and a third terminal 355-3, and a second state 357 electrically connecting the second terminal 355-2 and the third terminal 355-3. For example, the second switch 355 may be located outside the RFFE 160 and the another RFFE 360.

For example, the processor 120 may transmit the signal 191 obtained through the transmitting circuit 131 through the antenna 190 with power set using the PA 161. For example, the processor 120 may obtain the forward coupling signal 192 via the receiving circuit 132, based on electrically connecting the forward path 171 from the coupler 170, amongst the forward path 171 from the coupler 170 and the forward path 371 from the other coupler 371 through the first switch 350. For example, the processor 120 may obtain the forward coupling signal 192 through the first switch 350 in the first state 351. For example, the processor 120 may obtain the reverse coupling signal 193, based on electrically connecting the reverse path 172 from the coupler 170, amongst the reverse path 172 from the coupler 170 and the reverse path 372 from the other coupler 370, with the other receiving circuit 142. For example, the processor 120 may obtain the reverse coupling signal 193 through the second switch 355 in the first state 356. For example, the processor 120 may execute various operations described with reference to FIG. 1, based on the forward coupling signal 192 and the reverse coupling signal 193.

For example, the processor 120 may transmit another signal 301 obtained through the transmitting circuit 131, via another antenna 390 with the power set using the other PA 361. For example, based on electrically connecting the forward path 371 from the other coupler 370, among the forward path 171 from the coupler 170 and the forward path 371 from the other coupler 370, to the receiving circuit 132 through the first switch 350, the processor 120 may obtain a forward coupling signal 302 of the other signal 301 provided along the forward path 371 from the other coupler 370 according to the transmission of the other signal 301, via the receiving circuit 132. For example, the processor 120 may obtain the forward coupling signal 302 through the first switch 350 in the second state 352. For example, based on electrically connecting the reverse path 372 from the other coupler 370, among the reverse path 172 from the coupler 170 and the reverse path 372 from the other coupler 370, to the other receiving circuit 142 via the second switch 355, the processor 120 may obtain a reverse coupling signal 303 of the other signal 301 provided along the reverse path 372 from the other coupler 370 according to the transmission of the other signal 301, via the other receiving circuit 142. For example, the processor 120 may obtain the reverse coupling signal 303 through the second switch 355 in the second state 357.

For example, the processor 120 may perform various operations, based on the forward coupling signal 302 and the reverse coupling signal 303. For example, the processor 120 may identify strength of a signal to be transmitted through the antenna 390, based on the forward coupling signal 302 and the reverse coupling signal 303. For example, the processor 120 may identify the power of the signal 301 transmitted through the antenna 390, based on the forward coupling signal 302. For example, the processor 120 may identify an impedance of the antenna 390, based on the forward coupling signal 302 and the reverse coupling signal 303. For example, the processor 120 may identify a reflection coefficient of the antenna 390, based on the forward coupling signal 302 and the reverse coupling signal 303. For example, the processor 120 may adjust an impedance of the antenna 390, based on the forward coupling signal 302 and the reverse coupling signal 303. For example, the processor 120 may identify whether an external object (e.g., at least a part of a human body) is located within a certain distance from the electronic device 101, based on the forward coupling signal 302 and the reverse coupling signal 303. For example, the processor 120 may identify whether the electronic device 101 is gripped, based on forward coupling signal 302 and the reverse coupling signal 303. However, the disclosure is not limited thereto.

For example, the processor 120 may perform the various operations described above, based on compensating a difference between a phase of the forward coupling signal 302 and a phase of the reverse coupling signal 303. For example, since a length of the forward path 371 may be different from that of the reverse path 372, the processor 120 may perform the various operations based on compensating the difference.

For example, for carrier aggregation and/or dual connectivity, another signal 301 may be transmitted through another antenna 390, while the signal 191 is transmitted through the antenna 190. For example, when the other signal 301 is transmitted while the signal 191 is transmitted, the processor 120 may execute setting the first switch 350 to the first state 351 and setting the second switch 355 to the first state 356 in a first time interval (i.e., for a first time, for a first time period, or for a first duration etc.), in order to obtain the forward coupling signal 192 and the reverse coupling signal 193, and may execute setting the first switch 350 to the second state 352 and setting the second switch 355 to the second state 357 in a second time interval [i.e., for a second time, for a second time period, or for a second duration etc.) different from the first time interval in order to obtain the forward coupling signal 302 and the reverse coupling signal 303.

For example, based on identifying that the other signal 301 is transmitted through the other antenna 390 while the signal 191 is transmitted through the antenna 190, the processor 120 may electrically connect the forward path 171 from the coupler 170, amongst the forward path 171 from the coupler 170 and the forward path 371 from the other coupler 370, with the receiving circuit 132 in the first time interval, via the first switch 350, and electrically connect the reverse path 172 from the coupler 170, amongst the reverse path 172 from the coupler 170 and the reverse path 372 from the other coupler 370, with the other receiving circuit 142 in the first time interval, via the second switch 355. The forward coupling signal 192 and the reverse coupling signal 193 may be obtained within the first time interval. For example, within the first time interval (e.g., for a first time), the state of the first switch 350 may be maintained in the first state 351, and the state of the second switch 355 may be maintained in the first state 356.

For example, based on identifying that the other signal 301 is transmitted through the other antenna 390 while the signal 191 is transmitted through the antenna 190, the processor 120 may electrically connects the forward path 371 from the other coupler 370, amongst the forward path 171 from the coupler 170 and the forward path 371 from the other coupler 370, with the receiving circuit 132 within the second time interval, via the first switch 350, and may electrically connect the reverse path 372 from the other coupler 370, amongst the reverse path 172 from the coupler 170 and the reverse path 372 from the other coupler 370, with the other receiving circuit 142 within the second time interval, via the second switch 355. For example, the forward coupling signal 302 and the reverse coupling signal 303 may be obtained within the second time interval. For example, within the second time interval (e.g., for a second time, different to the first time), the state of the first switch 350 may be maintained in the second state 352, and the state of the second switch 355 may be maintained in the second state 357.

For example, when the other signal 301 is transmitted through the other antenna 390 while the signal 191 is transmitted through the antenna 190, the state of the first switch 350 and the state of the second switch 355 are respectively maintained in the first state 351 and the first state 356 within the first time interval while obtaining the forward coupling signal 192 and the reverse coupling signal 193, and the state of the first switch 350 and the state of the second switch 355 are respectively maintained in the second state 352 and the second state 357 within the second time interval different from the first time interval while obtaining the other forward coupling signal 302 and the other reverse coupling signal 303, so the electronic device 101 can reduce noise caused while obtaining coupling signals.

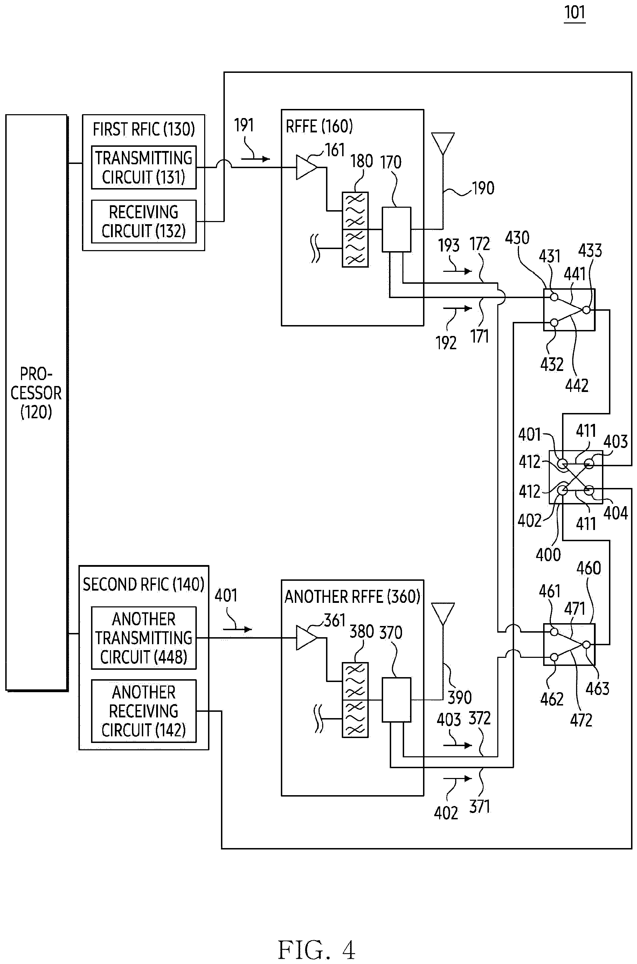

FIG. 3 illustrates the electronic device 101 that transmits multiple signals (e.g., a signal 191 and another signal 301) through multiple RFFEs (e.g., an RFFE 160 and another RFFE 360) using one RFIC (e.g., the first RFIC 131), but it is only for convenience of explanation. For example, the electronic device 101 may transmit a plurality of signals through each of a multiplicity of RFFEs using each of a multiplicity of RFICs. For example, the plurality of RFICs may include transmitting circuits, respectively. For example, the electronic device 101 including the plurality of RFICs each including the transmitting circuits will be described with reference to FIG. 4.

FIG. 4 is a simplified block diagram of an exemplary electronic device including radio frequency integrated circuits (RFICs) each including transmitting circuits.

Referring to FIG. 4, unlike the electronic device 101 in FIG. 3, the electronic device 101 may include a second RFIC 140 including another transmitting circuit 448. For example, the other transmitting circuit 448 may be connected to another PA 361. For example, the other PA 361 may be disconnected from the transmitting circuit 131 as opposed to the electronic device 101 in FIG. 3.

For example, the receiving circuit 132 of the first RFIC 130 may be electrically connected to the forward path 171 from the coupler 170 or the reverse path 372 from other coupler 370, as opposed to the receiving circuit 132 of FIG. 3. For example, components related to the connection between the receiving circuit 132 and the forward path 171 and components related to the connection between the receiving circuit 132 and the reverse path 372 will be described below.

For example, the other receiving circuit 142 of the second RFIC 140 may be electrically connected to the reverse path 172 from the coupler 170 or the forward path 371 from the other coupler 370, unlike the other receiving circuit 142 in FIG. 3. For example, the components related to the connection between the other receiving circuit 142 and the reverse path 172, and the components related to the connection between the receiving circuit 142 and the forward path 371 will be described below. For example, the other receiving circuit 142 may be connected to an LO (not shown in FIG. 4) connected to the other transmitting circuit 448.

For example, based on transmitting the signal 191 obtained through the receiving circuit 131, via the antenna 190, with the power set using the PA 161, the processor 120 may obtain the forward coupling signal 192 of the signal 191 provided through the forward path 171 from the coupler 170, via the receiving circuit 132, and obtain a reverse coupling signal 193 of the signal 191 provided through the reverse path 172 from the coupler 170, via the other receiving circuit 142.

For example, based on transmitting the other signal 401 obtained through the other transmitting circuit 448, via the other antenna 390, with the power set using the other PA 361, the processor 120 may obtain a forward coupling signal 402 of the other signal 401 provided through the forward path 371 from the other coupler 370, via the other receiving circuit 142, and may obtain a reverse coupling signal 403 of the other signal 401 provided through the reverse path 372 from the other coupler 370, via the receiving circuit 132. For example, the other signal 401 may be transmitted while the signal 191 is transmitted. However, the disclosure is not limited thereto. For example, the forward coupling signal 402 may be obtained through the other receiving circuit 142 connected to the LO connected to the other transmitting circuit 448 used to obtain the other signal 401.

For example, based on the forward coupling signal 192 of the signal 191 and the reverse coupling signal 193 of the signal 191, the processor 120 may perform various operations described with reference to FIG. 1 and/or FIG. 3. For example, the processor 120 may perform various operations illustrated by the description of FIGS. 1 and 3, based on the forward coupling signal 402 of the other signal 401 and the reverse coupling signal 403 of the other signal 401.

For example, the electronic device 101 may include components related to the connection between the receiving circuit 132 and the forward path 171, components related to the connection between the receiving circuit 132 and the reverse path 372, components related to the other receiving circuit 142 and the forward path 172, and components related to the receiving circuit 142 and the forward path 371. For example, the electronic device 101 may include a third switch 400, a first switch 430, and a second switch 460, in substitution for the first switch 350 and the second switch 355 of FIG. 3. For example, the electronic device 101 may include the third switch 400, the first switch 430, and the second switch 460 instead of the first switch 350 and the second switch 355.

For example, the third switch 400 may include a first terminal 401 connected to the third terminal 433 of the first switch 430, a second terminal 402 connected to the third terminal 463 of the second switch 460, a third terminal 403 connected to the receiving circuit 132, and a fourth terminal 404 connected to the other receiving circuit 142. For example, the third switch 400 may be located out of (e.g., external to) the RFFE 160 and the other RFFE 360. For example, the third switch 400 may have multiple states including a first state 411 electrically connecting the first terminal 401 and the third terminal 403 and electrically connecting the second terminal 402, and the fourth terminal 404, and a second state electrically connecting the first terminal 401 and the fourth terminal 404 and electrically connecting the second terminal 402 and the third terminal 403.

For example, the first switch 430 may include a first terminal 431 connected to the forward path 171 from the coupler 170, a second terminal 432 connected to the forward path 371 from the other coupler 370, and a third terminal 433 connected to the first terminal 401 of the third switch 400. For example, the first switch 430 may be located out of (e.g., external to) the RFFE 160 and the other RFFE 360. For example, the first switch 430 may have multiple states including a first state 441 electrically connecting the first terminal 431 and the third terminal 433, and a second state 442 electrically connecting the second terminal 432 and the third terminal 433.

For example, the second switch 460 may include a first terminal 461 connected to the reverse path 172 from the coupler 170, a second terminal 462 connected to the other reverse path 372 from the other coupler 370, and a third terminal 463 connected to the second terminal 402 of the third switch 400. For example, the second switch 460 may have multiple states including a first state 471 electrically connecting the first terminal 461 and the third terminal 463, and a second state 472 electrically connecting the second terminal 462 and the third terminal 463. For example, the second switch 460 may be located out of (e.g., external to) the RFFE 160 and the other RFFE 360.

For example, based on the transmission of the signal 191, when the third switch 400 is in the first state 411, the first switch 430 is in the first state 441, and the second switch 460 is in the first state 471, the processor 120 may obtain the forward coupling signal 192 of the signal 191 via the receiving circuit 132, and may obtain the reverse coupling signal 193 of the signal 191 via the other receiving circuit 142. For example, when the signal 191 is transmitted while the other signal 401 is transmitted, the forward coupling signal 192 and the reverse coupling signal 193 may be obtained within the first time interval.

For example, based on the transmission of the other signal 401, when the third switch 400 in the second state 412, the first switch 430 in the second state 442, and the second switch 460 in the second state 472, the processor 120 may obtain the reverse coupling signal 403 of the other signal 401 via the receiving circuit 132 and may obtain the forward coupling signal 402 of the other signal 401 via the other receiving circuit 142. For example, when the other signal 401 is transmitted while the signal 191 is transmitted, the forward coupling signal 402 and the reverse coupling signal 403 may be obtained within the second time interval different from the first time interval.

For example, since the forward coupling signal 192 and the reverse coupling signal 193 are obtained within the first time interval, the first state 411 of the third switch 400 may be maintained within the first time interval, the first state 441 of the first switch 430 may be maintained within the first time interval, and the first state 471 of the second switch 460 may be maintained within the first time interval. For example, since the forward coupling signal 402 and the reverse coupling signal 403 are obtained within the second time interval, the second state 412 of the third switch 400 may be maintained within the second time interval, the second state 442 of the first switch 430 may be maintained within the second time interval, and the second state 472 of the second switch 460 may be maintained within the second time interval.

For example, since the state of each of the third switch 400, the first switch 430, and the second switch 460 is maintained within the first time interval and within the second time interval, the electronic device 101 can reduce noise that may be caused while obtaining the coupling signals.

FIG. 5 is a block diagram of an electronic device in a network environment according to various embodiments.

FIG. 5 is a block diagram of an electronic device 501 in a network environment 500 according to various embodiments. Referring to FIG. 5, an electronic device 501 in a network environment 500 may communicate with an electronic device 502 via a first network 598 (e.g., a short-range wireless communication network), or at least one of an electronic device 504 or a server 508 via a second network 599 (e.g., a long-range wireless communication network). According to an embodiment, the electronic device 501 may communicate with the electronic device 504 via the server 508. According to an embodiment, the electronic device 501 may include a processor 520, a memory 530, an input module 550, a sound output module 555, a display module 560, an audio module 570, a sensor module 576, an interface 577, a connecting terminal 578, a haptic module 579, a camera module 580, a power management module 588, a battery 589, a communication module 590, a subscriber identification module (SIM) 596, or an antenna module 597. In some embodiments of the disclosure, at least one of the components (e.g., the connecting terminal 578) may be omitted from the electronic device 501, or one or more other components may be added in the electronic device 501. In some embodiments of the disclosure, some of the components (e.g., the sensor module 576, the camera module 580, or the antenna module 597) may be implemented as a single component (e.g., the display module 560).

The processor 520 may execute, for example, software (e.g., a program 540) to control at least one other component (e.g., a hardware or software component) of the electronic device 501 coupled with the processor 520, and may perform various data processing or computation. According to an embodiment, as at least part of the data processing or computation, the processor 520 may store a command or data received from another component (e.g., the sensor module 576 or the communication module 590) in a volatile memory 532, process the command or the data stored in the volatile memory 532, and store resulting data in a non-volatile memory 534. According to an embodiment, the processor 520 may include a main processor 521 (e.g., a central processing unit (CPU) or an application processor (AP)), or an auxiliary processor 523 (e.g., a graphics processing unit (GPU), a neural processing unit (NPU), an image signal processor (ISP), a sensor hub processor, or a communication processor (CP)) that is operable independently from, or in conjunction with, the main processor 521. For example, when the electronic device 501 includes the main processor 521 and the auxiliary processor 523, the auxiliary processor 523 may be adapted to consume less power than the main processor 521, or to be specific to a specified function. The auxiliary processor 523 may be implemented as separate from, or as part of the main processor 521.

The auxiliary processor 523 may control at least some of functions or states related to at least one component (e.g., the display module 560, the sensor module 576, or the communication module 590) among the components of the electronic device 501, instead of the main processor 521 while the main processor 521 is in an inactive (e.g., sleep) state, or together with the main processor 521 while the main processor 521 is in an active state (e.g., executing an application). According to an embodiment, the auxiliary processor 523 (e.g., an image signal processor or a communication processor) may be implemented as part of another component (e.g., the camera module 580 or the communication module 590) functionally related to the auxiliary processor 523. According to an embodiment, the auxiliary processor 523 (e.g., the neural processing unit) may include a hardware structure specified for artificial intelligence model processing. An artificial intelligence model may be generated by machine learning. Such learning may be performed, e.g., by the electronic device 501 where the artificial intelligence is performed or via a separate server (e.g., the server 508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534.

The program 540 may be stored in the memory 530 as software, and may include, for example, an operating system (OS) 542, middleware 544, or an application 546.

The input module 550 may receive a command or data to be used by another component (e.g., the processor 520) of the electronic device 501, from the outside (e.g., a user) of the electronic device 501. The input module 550 may include, for example, a microphone, a mouse, a keyboard, a key (e.g., a button), or a digital pen (e.g., a stylus pen).

The sound output module 555 may output sound signals to the outside of the electronic device 501. The sound output module 555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 560 may visually provide information to the outside (e.g., a user) of the electronic device 501. The display module 560 may include, for example, a display, a hologram device, or a projector and control circuitry to control a corresponding one of the display, hologram device, and projector. According to an embodiment, the display module 560 may include a touch sensor adapted to detect a touch, or a pressure sensor adapted to measure the strength of force incurred by the touch.

The audio module 570 may convert a sound into an electrical signal and vice versa. According to an embodiment, the audio module 570 may obtain the sound via the input module 550, or output the sound via the sound output module 555 or a speaker or a headphone of an external electronic device (e.g., an electronic device 502) directly (e.g., wiredly) or wirelessly coupled with the electronic device 501.

The sensor module 576 may detect an operational state (e.g., power or temperature) of the electronic device 501 or an environmental state (e.g., a state of a user) external to the electronic device 501, and then generate an electrical signal or data value corresponding to the detected state. According to an embodiment, the sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device (e.g., the electronic device 502) directly (e.g., wiredly) or wirelessly. According to an embodiment, the interface 577 may include, for example, a high-definition multimedia interface (HDMI), a universal serial bus (USB) interface, a secure digital (SD) card interface, or an audio interface.

A connecting terminal 578 may include a connector via which the electronic device 501 may be physically connected with the external electronic device (e.g., the electronic device 502). According to an embodiment, the connecting terminal 578 may include, for example, a HDMI connector, a USB connector, a SD card connector, or an audio connector (e.g., a headphone connector).

The haptic module 579 may convert an electrical signal into a mechanical stimulus (e.g., a vibration or a movement) or electrical stimulus which may be recognized by a user via his tactile sensation or kinesthetic sensation. According to an embodiment, the haptic module 579 may include, for example, a motor, a piezoelectric element, or an electric stimulator.

The camera module 580 may capture a still image or moving images. According to an embodiment, the camera module 580 may include one or more lenses, image sensors, image signal processors, or flashes.

The power management module 588 may manage power supplied to the electronic device 501. According to an embodiment, the power management module 588 may be implemented as at least part of, for example, a power management integrated circuit (PMIC).

The battery 589 may supply power to at least one component of the electronic device 501. According to an embodiment, the battery 589 may include, for example, a primary cell which is not rechargeable, a secondary cell which is rechargeable, or a fuel cell.

The communication module 590 may support establishing a direct (e.g., wired) communication channel or a wireless communication channel between the electronic device 501 and the external electronic device (e.g., the electronic device 502, the electronic device 504, or the server 508) and performing communication via the established communication channel. The communication module 590 may include one or more communication processors that are operable independently from the processor 520 (e.g., the application processor (AP)) and supports a direct (e.g., wired) communication or a wireless communication. According to an embodiment, the communication module 590 may include a wireless communication module 592 (e.g., a cellular communication module, a short-range wireless communication module, or a global navigation satellite system (GNSS) communication module) or a wired communication module 594 (e.g., a local area network (LAN) communication module or a power line communication (PLC) module). A corresponding one of these communication modules may communicate with the external electronic device via the first network 598 (e.g., a short-range communication network, such as Bluetooth^{™}, wireless-fidelity (Wi-Fi) direct, or infrared data association (IrDA)) or the second network 599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 592 may identify and authenticate the electronic device 501 in a communication network, such as the first network 598 or the second network 599, using subscriber information (e.g., international mobile subscriber identity (IMSI)) stored in the subscriber identification module 596.

The wireless communication module 592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 592 may support a high-frequency band (e.g., the mm Wave band) to address, e.g., a high data transmission rate. The wireless communication module 592 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 592 may support various requirements specified in the electronic device 501, an external electronic device (e.g., the electronic device 504), or a network system (e.g., the second network 599). According to an embodiment, the wireless communication module 592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 597 may transmit or receive a signal or power to or from the outside (e.g., the external electronic device) of the electronic device 501. According to an embodiment, the antenna module 597 may include an antenna including a radiating element including a conductive material or a conductive pattern formed in or on a substrate (e.g., a printed circuit board (PCB)). According to an embodiment, the antenna module 597 may include a plurality of antennas (e.g., array antennas). In such a case, at least one antenna appropriate for a communication scheme used in the communication network, such as the first network 598 or the second network 599, may be selected, for example, by the communication module 590 (e.g., the wireless communication module 592) from the plurality of antennas. The signal or the power may then be transmitted or received between the communication module 590 and the external electronic device via the selected at least one antenna. According to an embodiment, another component (e.g., a radio frequency integrated circuit (RFIC)) other than the radiating element may be additionally formed as part of the antenna module 597.

According to various embodiments, the antenna module 597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 501 and the external electronic device 504 via the server 508 coupled with the second network 599. Each of the electronic devices 502 or 504 may be a device of a same type as, or a different type, from the electronic device 501. According to an embodiment, all or some of operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 501. The electronic device 501 may provide the outcome, with or without further processing of the outcome, as at least part of a reply to the request. To that end, a cloud computing, distributed computing, mobile edge computing (MEC), or client-server computing technology may be used, for example. The electronic device 501 may provide ultra low-latency services using, e.g., distributed computing or mobile edge computing. In another embodiment of the disclosure, the external electronic device 504 may include an internet-of things (IoT) device. The server 508 may be an intelligent server using machine learning and/or a neural network. According to an embodiment, the external electronic device 504 or the server 508 may be included in the second network 599. The electronic device 501 may be applied to intelligent services (e.g., smart home, smart city, smart car, or healthcare) based on 5G communication technology or IoT-related technology.

As described above, the electronic device 101 may include an antenna 190. The electronic device 101 may include a radio frequency front end 160 including a coupler 170 connected to the antenna 190 and a power amplifier 161 connected to the coupler 170. The electronic device 101 may include a first radio frequency integrated circuit (RFIC) 130 including a transmitting circuit 131 connected to the PA 161 and a receiving circuit 132 connectable to a forward path 171 from the coupler 170. The electronic device 101 may include a second radio frequency integrated circuit (RFIC) 140 including a receiving circuit 142 connectable to a reverse path 172 from the coupler 170. The electronic device 101 may include a processor 120. According to an embodiment, the processor 120 may be configured to transmit a signal 191 obtained through the transmitting circuit 131, via the antenna 190 with power set using the PA 161. According to an embodiment, the processor 120 may be configured to obtain a forward coupling signal 192 of the signal 191 provided through the forward path 171 according to the transmission of the signal 191, via the receiving circuit 132 of the first RFIC 130. According to an embodiment, the processor 120 may be configured to obtain a reverse coupling signal 193 of the signal 191 provided through the reverse path 172 according to the transmission of the signal 191, via the receiving circuit 142 of the second RFIC 140. According to an embodiment, the processor 120 may be configured to identify strength of a signal to be transmitted through the antenna 190, based on the forward coupling signal 192 and the reverse coupling signal 193.

According to an embodiment, the electronic device 101 may include another antenna 390, another radio frequency front end 360 including another coupler 370 connected to the another antenna 390 and another PA 361 connected to the transmitting circuit 131, a first switch 350, and a second switch 355. According to an embodiment, the receiving circuit 132 of the first RFIC 130 may be connected to a forward path 371 from the another coupler 370 through the first switch 350. According to an embodiment, the receiving circuit 142 of the second RFIC 360 may be connected to a reverse path 372 from the another coupler 370 through the second switch 355. According to an embodiment, the first switch 350 may be configured to connect one forward path of the forward path 171 from the coupler 170 and the forward path 371 from the another coupler 370, with the receiving circuit 132 of the first RFIC 130. According to an embodiment, the second switch 355 may be configured to connect one reverse path of the reverse path 172 from the coupler 170 and the reverse path 372 from the another coupler 370, with the receiving circuit 142 of the second RFIC 140.

According to an embodiment, the processor 120 may be configured to obtain the forward coupling signal 192, based on connecting the forward path 171 from the coupler 170, amongst the forward path 171 from the coupler 170 and the forward path 371 from the another coupler 370, with the receiving circuit 132 of the first RFIC 130, via the first switch 350. According to an embodiment, the processor 120 may be configured to obtain the reverse coupling signal 193, based on connecting the reverse path 172 from the coupler 170, amongst the reverse path 172 from the coupler 170 and the reverse path 372 from the another coupler 370, with the receiving circuit 142 of the second RFIC 140, via the second switch 355.

According to an embodiment, the processor 120 may be configured to transmit another signal 301 obtained through the transmitting circuit 131, via the another antenna 390, with power set using the another PA 361. According to an embodiment, based on connecting through the first switch 350 the forward path 371 from the another coupler 370, amongst the forward path 171 from the coupler 170 and the forward path 371 from the another coupler 370, with the receiving circuit 132 of the first RFIC 130, the processor 120 may be configured to obtain a forward coupling signal 302 of the another signal 301 provided along the forward path 371 from the another coupler 370 according to the transmission of the another signal 301, via the receiving circuit 132 of the first RFIC 130. According to an embodiment, based on connecting through the second switch 355 the reverse path 372 from the another coupler 370, amongst the reverse path 172 from the coupler 170 and the reverse path 372 from the another coupler 370, with the receiving circuit 142 of the second RFIC 140, the processor 120 may be configured to obtain a reverse coupling signal 303 of the another signal 301 provided along the reverse path 372 from the another coupler 370 according to the transmission of the another signal 301, via the receiving circuit 142 of the second RFIC 140. According to an embodiment, the processor 120 may be configured to identify strength of a signal to be transmitted through the another antenna 390, based on the forward coupling signal 302 of the another signal 301 and the reverse coupling signal 303 of the another signal 301.

According to an embodiment, based on identifying that the another signal 301 is transmitted through the another antenna 390 while the signal 191 is transmitted through the antenna 190, the processor 120 may be configured to: connect, via the first switch 350, the forward path 171 from the coupler 170, amongst the forward path 171 from the coupler 170 and the forward path 371 from the another coupler 370, with the receiving circuit 132 of the first RFIC 130 within a first time interval; connect, via the second switch 355, the reverse path 172 from the coupler 170, amongst the reverse path 172 from the coupler 170 and the reverse path 372 from the another coupler 370, with the receiving circuit 142 of the second RFIC 140 within the first time interval; connect, via the first switch 350, the forward path 371 from the another coupler 370, amongst the forward path 171 from the coupler 170 and the forward path 371 from the another coupler 370, with the receiving circuit 132 of the first RFIC 130 within a second time interval different from the first time interval; and connect, via the second switch 355, the reverse path 372 from the another coupler 370, amongst the reverse path 172 from the coupler 170 and the reverse path 372 from the another coupler 370, with the receiving circuit 142 of the second RFIC 140 within the second time interval.

According to an embodiment, the first switch 350 and the second switch may be positioned out of the RFFE 160 and the another RFFE 360.

According to an embodiment, the first RFIC 130 may include a local oscillator (LO). According to an embodiment, the transmitting circuit 131 may include a mixer connected to the LO. According to an embodiment, the receiving circuit 132 of the first RFIC 130, amongst the receiving circuit 132 of the first RFIC 130 and the receiving circuit 142 of the second RFIC 140, may include a mixer connected to the LO.

According to an embodiment, the electronic device 101 may further include a tuner 181 connected to the antenna 190. According to an embodiment, the coupler 170 may be connected to the antenna 190 through the tuner 181. According to an embodiment, the processor 120 may be configured to adjust an impedance of the antenna 190 through the tuner 181, based on the forward coupling signal 192 and the reverse coupling signal 193.

According to an embodiment, the processor 120 may be configured to identify the strength, based on compensating a difference in between a phase of the forward coupling signal 192 and a phase of the reverse coupling signal 193.

According to an embodiment, the coupler 170 may include a port for the forward path 171 and a port for the reverse path 172.

According to an embodiment, the first RFIC 130 may include another receiving circuit. According to an embodiment, the RFFE 160 may include a low noise amplifier (LNA) connected to the another receiving circuit and connected to the coupler 170. According to an embodiment, the processor 120 may be configured to receive a signal received through the antenna 190, via the LNA and the another receiving circuit.

According to an embodiment, the forward coupling signal 192 may be used to identify power of the signal 191 transmitted through the antenna 190.

According to an embodiment, the connection between the forward path 171 and the receiving circuit 132 of the first RFIC 130 may be maintained while obtaining the forward coupling signal 192. According to an embodiment, the connection between the reverse path 172 and the receiving circuit 142 of the second RFIC 140 may be maintained while obtaining the reverse coupling signal 193.

As described above, an electronic device 101 may include a first antenna 190. The electronic device 101 may include a second antenna 390. The electronic device 101 may include a first radio frequency front end (RFFE) 160 including a coupler 170 connected to the first antenna 190 and a power amplifier 161 connected to the coupler 170. The electronic device 101 may include a second RFFE 360 including another coupler 370 connected to the second antenna 390 and another PA 361 connected to the other coupler 370. The electronic device 101 may include a first radio frequency integrated circuit (RFIC) 130 including a transmitting circuit 141 connected to the PA 161 and a receiving circuit 132 connectable to a forward path 171 from the coupler 170 or a reverse path 372 from the another coupler 370. The electronic device 101 may include a second RFIC 140 including another transmitting circuit 448 connected to the another PA 361 and another receiving circuit 142 connectable to a reverse path 172 from the coupler 170 or a forward path 371 from the another coupler 370. The electronic device 101 may include a processor 120. According to an embodiment, the processor 120, based on transmitting a first signal 191 obtained through the transmitting circuit 131, via the first antenna 190, with power set using the PA 161, obtain a forward coupling signal 192 of the first signal 191 provided through the forward path 171 from the coupler 170, via the receiving circuit 132, and obtain a reverse coupling signal 193 of the first signal 191 provided through the reverse path 172 from the coupler 170, via the another receiving circuit 142. According to an embodiment, the processor 120, based on transmitting a second signal 401 obtained through the another transmitting circuit 448, via the second antenna 390, with power set using the another PA 161, obtain a forward coupling signal 402 of the second signal 401 provided through the forward path 371 from the another coupler 370, via the another receiving circuit 142, and obtain a reverse coupling signal 403 of the second signal 401 provided through the reverse path 372 from the another coupler 370, via the receiving circuit 132. According to an embodiment, the processor 120 may be configured to identify strength of a signal to be transmitted through the first antenna 190, based on the forward coupling signal 192 of the first signal 191 and the reverse coupling signal 193 of the first signal 191. According to an embodiment, the processor 120 may be configured to identify strength of a signal to be transmitted through the second antenna 390, based on the forward coupling signal 402 of the second signal 401 and the reverse coupling signal 403 of the second signal 401.

According to an embodiment, the first signal 191 may be transmitted while the second signal 401 is transmitted.

According to an embodiment, the electronic device 101 may further include a first switch 400 including a first terminal 401, a second terminal 402, a third terminal 403 connected to the receiving circuit 132, and a fourth terminal 404 connected to the another receiving circuit 142; a second switch 433 including a first terminal 431 connected to the forward path 171 from the coupler 170, a second terminal 432 connected to the forward path 371 from the another coupler 370, and a third terminal 433 connected to the first terminal 401 of the first switch 400; and a third switch 460 including a first terminal 461 connected to the reverse path 172 from the coupler 170, a second terminal 462 connected to the reverse path 372 from the another coupler 370, and a third terminal 463 connected to the second terminal 402 of the first switch 400.

According to an embodiment, the processor 120 may be configured to, based on the transmission of the first signal 191, obtain the forward coupling signal 192 of the first signal 191 via the receiving circuit 132 and obtain the reverse coupling signal 193 of the first signal 191 via the another receiving circuit 142, by means of connecting the first terminal 401 of the first switch 400 and the third terminal 403 of the first switch 400, connecting the second terminal 402 of the first switch 400 and the fourth terminal 404 of the first switch 400, connecting the first terminal 431 of the second switch 430 and the third terminal 433 of the second switch 430, and connecting the first terminal 461 of the third switch 460 and the third terminal 463 of the third switch 460.

According to an embodiment, the processor 120 may be configured to, based on the transmission of the second signal 401, obtain the reverse coupling signal 403 of the second signal 401 via the receiving circuit 132 and obtain the forward coupling signal 402 of the second signal 401 via the another receiving circuit 142, by means of connecting the first terminal 401 of the first switch 400 and the fourth terminal 404 of the first switch 400, connecting the second terminal 402 of the first switch 400 and the third terminal 403 of the first switch 400, connecting the second terminal 432 of the second switch 430 and the third terminal 433 of the second switch 430, and connecting the second terminal 462 of the third switch 460 and the third terminal 463 of the third switch 460.

According to an embodiment, the second switch 430 and the third switch 460 may be located out of the first RFFE 160 and the second RFFE 360.

According to an embodiment, the processor 120 may be configured to identify strength of a signal to be transmitted through the first antenna 190, based on compensating a difference between a phase of the forward coupling signal 192 of the first signal 191 and a phase of the reverse coupling signal 193 of the first signal 191. According to one embodiment, the processor 120 may be configured to identify strength of a signal to be transmitted through the second antenna 390, based on compensating a difference between a phase of the forward coupling signal 402 of the second signal 401 and a phase of the reverse coupling signal 403 of the second signal 401.

According to an aspect of the present disclosure, there is provided an electronic device, comprising: a first antenna; a first radio frequency front end, RFFE, including a first coupler connected to the first antenna and a first power amplifier, PA, connected to the first coupler; a first radio frequency integrated circuit, RFIC, including a first transmitting circuit connected to the first PA and a first receiving circuit connectable to a first forward path from the first coupler; a second RFIC including a second receiving circuit connectable to a first reverse path from the first coupler; and a processor, wherein the processor is configured to: transmit a first signal through the first antenna, via the first transmitting circuit, with power set using the first PA; obtain, via the first receiving circuit, a first forward coupling signal of the first signal through the first forward path based on transmitting the first signal; obtain, via the second receiving circuit, a first reverse coupling signal of the first signal through the first reverse path based on transmitting the first signal; and identify strength of a signal to be transmitted through the first antenna, based on the first forward coupling signal and the first reverse coupling signal.

According to an embodiment, the electronic device may further comprise: a second antenna; a second RFFE including a second coupler connected to the second antenna and a second PA connected to the first transmitting circuit; a first switch; and a second switch, wherein the first receiving circuit of the first RFIC is connectable to a second forward path from the second coupler through the first switch; wherein the second receiving circuit of the second RFIC is connectable to a second reverse path from the second coupler through the second switch; wherein the first switch is configured to connect one forward path among the first forward path and the second forward path with the first receiving circuit of the first RFIC; and wherein the second switch is configured to connect one reverse path among the first reverse path and the second reverse path with the second receiving circuit of the second RFIC.

According to an embodiment, the processor is further configured to: obtain the first forward coupling signal, based on connecting the first forward path with the first receiving circuit of the first RFIC, via the first switch; and obtain the first reverse coupling signal, based on connecting the first reverse path with the second receiving circuit of the second RFIC, via the second switch.

According to an embodiment, the processor is further configured to: transmit a second signal through the second antenna, via the first transmitting circuit, with power set using the second PA; based on connecting, via the first switch, the second forward path with the first receiving circuit, obtain, via the first receiving circuit, a second forward coupling signal of the second signal through the second forward path based on transmitting the second signal; based on connecting, via the second switch, the second reverse path with the second receiving circuit, obtain, via the second receiving circuit, a second reverse coupling signal of the second signal through the second reverse path based on transmitting the second signal; and identify strength of a signal to be transmitted through the second antenna, based on the second forward coupling signal and the second reverse coupling signal.

According to an embodiment, wherein based on identifying that the second signal is transmitted through the second antenna while the first signal is transmitted through the first antenna, the processor is further configured to: connect, via the first switch, the first forward path with the first receiving circuit of the first RFIC within a first time interval; connect, via the second switch, the first reverse path with the second receiving circuit of the second RFIC within the first time interval; connect, via the first switch, the second forward path with the first receiving circuit of the first RFIC within a second time interval different from the first time interval; and connect, via the second switch, the second reverse path with the second receiving circuit of the second RFIC within the second time interval.

According to embodiments, the first switch and the second switch are located out of (e.g., external to) the first RFFE and the second RFFE.

According to an embodiment, the electronic device further comprises: a second antenna; and a second RFFE including a second coupler connected to the second antenna and a second PA; wherein the first receiving circuit is connectable to a second reverse path from the second coupler; wherein the second receiving circuit is connectable to a second forward path from the second coupler; wherein the second RFIC includes a second transmitting circuit connected to the second PA; and wherein the processor is configured to: transmit a second signal through the second antenna, via the second transmitting circuit, with power set using the second PA; obtain, via the first receiving circuit, a second reverse coupling signal of the second signal through the second reverse path, based on transmitting the second signal; obtain, via the second receiving circuit, a second forward coupling signal of the second signal through the second forward path, based on transmitting the second signal; and identify strength of a signal to be transmitted through the second antenna, based on the second forward coupling signal and the second reverse coupling signal.

According to an embodiment, the first signal is transmitted while the second signal is transmitted.

According to an embodiment, the electronic device further comprises: a first switch including a first terminal, a second terminal, a third terminal connected to the first receiving circuit, and a fourth terminal connected to the second receiving circuit; a second switch including a first terminal connected to the first forward path, a second terminal connected to the second forward path, and a third terminal connected to the first terminal of the first switch; and a third switch including a first terminal connected to the first reverse path, a second terminal connected to the second reverse path, and a third terminal connected to the second terminal of the first switch.

According to an embodiment, the processor is further configured to: based on transmitting the first signal, obtain the first forward coupling signal via the first receiving circuit and obtain the first reverse coupling signal via the second receiving circuit, by means of connecting the first terminal of the first switch and the third terminal of the first switch, connecting the second terminal of the first switch and the fourth terminal of the first switch, connecting the first terminal of the second switch and the third terminal of the second switch, and connecting the first terminal of the third switch and the third terminal of the third switch.

According to an embodiment, the processor is configured to: based on transmitting the second signal, obtain the second reverse coupling signal via the first receiving circuit and obtain the second forward coupling signal via the second receiving circuit, by means of connecting the first terminal of the first switch and the fourth terminal of the first switch, connecting the second terminal of the first switch and the third terminal of the first switch, connecting the second terminal of the second switch and the third terminal of the second switch, and connecting the second terminal of the third switch and the third terminal of the third switch.

According to an embodiment, the processor is further configured to identify the strength of the signal to be transmitted through the first antenna, based on compensating a difference between a phase of the first forward coupling signal and a phase of the first reverse coupling signal.

According to an embodiment, the processor is configured to: identify strength of a signal to be transmitted through the first antenna, based on compensating a difference between a phase of the first forward coupling signal of the first signal and a phase of the first reverse coupling signal of the first signal; and identify strength of a signal to be transmitted through the second antenna, based on compensating a difference between a phase of the second forward coupling signal of the second signal and a phase of the second reverse coupling signal of the second signal.

According to an embodiment, the first RFIC further includes a local oscillator, LO; the first transmitting circuit includes a mixer connected to the LO; and the first receiving circuit of the first RFIC includes a mixer connected to the LO.

According to an embodiment, the electronic device further including a tuner connected to the first antenna; wherein the first coupler is connected to the first antenna through the tuner; and wherein the processor is further configured to adjust an impedance of the first antenna through the tuner, based on the first forward coupling signal and the first reverse coupling signal.

According to an embodiment, the first coupler includes a port for the first forward path and a port for the first reverse path.

According to an embodiment, the first RFIC further includes a third receiving circuit; wherein the first RFFE further includes a low noise amplifier, LNA, connected to the third receiving circuit and connected to the first coupler; and wherein the processor is configured to receive a signal received through the first antenna, via the LNA and the third receiving circuit.

According to an embodiment, the first forward coupling signal is used to identify power of the first signal transmitted through the first antenna.

According to an embodiment, a connection between the first forward path and the first receiving circuit is maintained while obtaining the first forward coupling signal, and a connection between the first reverse path and the second receiving circuit is maintained while obtaining the first reverse coupling signal.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as " 1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 540) including one or more instructions that are stored in a storage medium (e.g., an internal memory 536 or an external memory 538) that is readable by a machine (e.g., the electronic device 501). For example, a processor (e.g., the processor 520) of the machine (e.g., the electronic device 501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
an antenna (190);
a radio frequency front end (RFFE) (160) including a coupler (170) connected to the antenna (190) and a power amplifier (PA) (161) connected to the coupler (170);
a first radio frequency integrated circuit (RFIC) (130) including a transmitting circuit (131) connected to the PA (161) and a receiving circuit (132) connectable to a forward path (171) from the coupler (170);
a second radio frequency integrated circuit (RFIC) (140) including a receiving circuit (142) connectable to a reverse path (172) from the coupler (170); and
a processor (120),
wherein the processor (120) is configured to:
transmit a signal (191) obtained through the transmitting circuit (131), via the antenna (190) with power set using the PA (161);
obtain a forward coupling signal 192 of the signal (191) provided through the forward path (171) according to the transmission of the signal (191), via the receiving circuit (132) of the first RFIC (130);
obtain a reverse coupling signal (193) of the signal (191) provided through the reverse path (172) according to the transmission of the signal (191), via the receiving circuit (142) of the second RFIC (140); and
identify strength of a signal to be transmitted through the antenna (190), based on the forward coupling signal (192) and the reverse coupling signal (193).

2. The electronic device according to claim 1, further comprising:
another antenna (390);
another radio frequency front end (RFFE) (360) including another coupler (370) connected to the another antenna (390) and another PA (361) connected to the transmitting circuit (131);
a first switch (350); and
a second switch (355),
wherein the receiving circuit (132) of the first RFIC (130) is connectable to a forward path (371) from the another coupler (370) through the first switch (350);
wherein the receiving circuit (142) of the second RFIC (360) is connectable to a reverse path (372) from the another coupler (370) through the second switch (355);
wherein the first switch (350) is configured to connect one forward path of the forward path (171) from the coupler (170) and the forward path (371) from the another coupler (370), with the receiving circuit (132) of the first RFIC (130); and
wherein the second switch (355) is configured to connect one reverse path of the reverse path (172) from the coupler (170) and the reverse path (372) from the another coupler (370), with the receiving circuit (142) of the second RFIC (140).

3. The electronic device according to claim 2, wherein the processor (120) is configured to:
obtain the forward coupling signal (192), based on connecting through the first switch (350) the forward path (171) from the coupler (170), amongst the forward path (171) from the coupler (170) and the forward path (371) from the another coupler (370), with the receiving circuit (132) of the first RFIC (130), via the first switch (350); and
obtain the reverse coupling signal (193), based on connecting through the second switch (355) the reverse path (172) from the coupler (170), amongst the reverse path (172) from the coupler (170) and the reverse path (372) from the another coupler (370), with the receiving circuit (142) of the second RFIC (140), via the second switch (355).

4. The electronic device according to claim 3, wherein the processor (120) is configured to:
transmit another signal (301) obtained through the transmitting circuit (131), via the another antenna (390), with power set using the another PA (361);
based on connecting through the first switch (350) the forward path (371) from the another coupler (370), amongst the forward path (171) from the coupler (170) and the forward path (371) from the another coupler (370), with the receiving circuit (132) of the first RFIC (130), obtain a forward coupling signal (302) of the another signal (301) provided along the forward path (371) from the another coupler (370) according to the transmission of the another signal (301), via the receiving circuit (132) of the first RFIC (130);
based on connecting through the second switch (355) the reverse path (372) from the another coupler (370), amongst the reverse path (172) from the coupler (170) and the reverse path (372) from the another coupler (370), with the receiving circuit (142) of the second RFIC (140), obtain a reverse coupling signal (303) of the another signal (301) provided along the reverse path (372) from the another coupler (370) according to the transmission of the another signal (301), via the receiving circuit (142) of the second RFIC (140); and
identify strength of a signal to be transmitted through the another antenna (390), based on the forward coupling signal (302) of the another signal (301) and the reverse coupling signal (303) of the another signal (301).

5. The electronic device according to claim 4, wherein based on identifying that the another signal (301) is transmitted through the another antenna (390) while the signal (191) is transmitted through the antenna (190), the processor (120) is configured to:
connect, via the first switch (350), the forward path (171) from the coupler (170), amongst the forward path (171) from the coupler (170) and the forward path (371) from the another coupler (370), with the receiving circuit (132) of the first RFIC (130) within a first time interval;
connect, via the second switch (355), the reverse path (172) from the coupler (170), amongst the reverse path (172) from the coupler (170) and the reverse path (372) from the another coupler (370), with the receiving circuit (142) of the second RFIC (140) within the first time interval;
connect, via the first switch (350), the forward path (371) from the another coupler (370), amongst the forward path (171) from the coupler (170) and the forward path (371) from the another coupler (370), with the receiving circuit (132) of the first RFIC (130) within a second time interval different from the first time interval; and
connect, via the second switch (355), the reverse path (372) from the another coupler (370), amongst the reverse path (172) from the coupler (170) and the reverse path (372) from the another coupler (370), with the receiving circuit (142) of the second RFIC (140) within the second time interval.

6. The electronic device according to claim 2, wherein the first switch (350) and the second switch are located out of the RFFE (160) and the another RFFE (360).

7. The electronic device according to claim 1,
wherein the first RFIC (130) further includes a local oscillator (LO);
wherein the transmitting circuit (131) includes a mixer connected to the LO; and
wherein the receiving circuit (132) of the first RFIC (130), amongst the receiving circuit (132) of the first RFIC (130) and the receiving circuit (142) of the second RFIC (140), includes a mixer connected to the LO.

8. The electronic device according to claim 1,
further including a tuner (181) connected to the antenna (190);
wherein the coupler (170) is connected to the antenna (190) through the tuner (181); and
wherein the processor (120) is further configured to adjust an impedance of the antenna (190) through the tuner (181), based on the forward coupling signal (192) and the reverse coupling signal (193).

9. The electronic device according to claim 1, wherein the processor (120) is configured to identify the strength, based on compensating a difference between a phase of the forward coupling signal (192) and a phase of the reverse coupling signal (193).

10. The electronic device according to claim 1, wherein the coupler (170) includes a port for the forward path (171) and a port for the reverse path (172).

11. The electronic device according to claim 1,
wherein the first RFIC (130) further includes another receiving circuit;
wherein the RFFE (160) further includes a low noise amplifier (LNA) connected to the another receiving circuit and connected to the coupler (170); and
wherein the processor (120) is configured to receive a signal received through the antenna (190), via the LNA and the another receiving circuit.

12. The electronic device according to claim 1, wherein the forward coupling signal (192) is used to identify power of the signal (191) transmitted through the antenna (190).

13. The electronic device according to claim 1,
wherein a connection between the forward path (171) and the receiving circuit (132) of the first RFIC (130) is maintained while obtaining the forward coupling signal (192), and
wherein a connection between the reverse path (172) and the receiving circuit (142) of the second RFIC (140) is maintained while obtaining the reverse coupling signal (193).

14. The electronic device of claim 1, further comprising:
another antenna (390); and
a second RFFE (360) including another coupler (370) connected to the other antenna (390) and another PA (361) connected to the other coupler (370),
wherein the receiving circuit (132) of the first RFIC (130) is connectable to the forward path (171) from the coupler (170) or a reverse path (372) from the other coupler (370);
wherein the second RFIC includes another Tx circuit (448) connected to the other PA and another Rx circuit (142) connectable to the reverse path (172) from the coupler or a forward path (371) from the other coupler (370),
wherein the processor (120) is configured to:
based on transmitting via the other antenna (390) another signal (401) obtained through the other Tx circuit with power set using the other PA (361), obtain via the other Rx circuit (142) a forward coupling signal (402) of the other signal (401) provided through the forward path (371) from the other coupler (370) and obtain via the Rx circuit (132) a reverse coupling signal (403) of the other signal (401) provided through the reverse path (372) from the other coupler (370); and
identify strength of a signal to be transmitted through the other antenna (390), based on the forward coupling signal (402) of the other signal (401) and the reverse coupling signal (403) of the other signal (401).

15. The electronic device according to claim 14, wherein the signal (191) is transmitted while the other signal (401) is transmitted.
